# NEUE EUROPÄISCHE PATENTSCHRIFT

(11) **EP 0 777 564 B2**
(45) Veröffentlichungstag und Bekanntmachung des Hinweises auf die Entscheidung über den Einspruch: **19.03.2003**
(45) Hinweis auf die Patenterteilung: 07.10.1998
(21) Anmeldenummer: 95924976.4
(22) Anmeldetag: 05.07.1995
(51) Int. Cl.: B29C 44/46

(54) **VERFAHREN ZUR SCHAUMHERSTELLUNG MITTELS UNTER DRUCK GELÖSTEN KOHLENDIOXIDS**
PROCESS FOR PREPARING FOAM USING CARBON DIOXIDE DISSOLVED UNDER PRESSURE
PROCEDE POUR LA PRODUCTION DE MOUSSES AU MOYEN DE DIOXYDE DE CARBONE DISSOUS SOUS PRESSION

(30) Priorität: 18.07.1994 DE 4425317; 21.12.1994 DE 4445789
(43) Veröffentlichungstag der Anmeldung: 11.06.1997
(73) Patentinhaber: BAYER AG, 51368 Leverkusen (DE); Hennecke GmbH, 51379 Leverkusen (DE)
(72) Erfinder: EBELING, Wilfried, D-51069 Köln (DE); EIBEN, Robert, D-51061 Köln (DE); JACOBS, Gundolf, D-51503 Rösrath (DE); RABE, Hansjürgen, D-51381 Leverkusen (DE); STEILEN, Herbert, D-53639 Königswinter (DE); THIEBES, Florian, D-53639 Königswinter (DE)
(86) Internationale Anmeldenummer: EP9502605
(87) Internationale Veröffentlichungsnummer: WO96002377

(56) Entgegenhaltungen:
- EP-A- 0 378 243
- EP-A- 0 587 078
- WO-A-92/16363
- WO-A-94/04256
- WO-A-96/00644
- US-A- 3 108 976
- US-A- 3 256 218
- US-A- 3 833 202
- US-A- 4 337 318
- DATABASE WPI Section Ch, Week 7849 Derwent Publications Ltd., London, GB; Class A17, AN 78-88510A & JP,A,53 124 575 ( HITACHI CHEMICAL KK) , 31.Oktober 1978

## Beschreibung

Die vorliegende Erfindung betrifft ein Verfahren und zur Herstellung von Schäumen mittels unter Druck gelöstem Kohlendioxid als Treibmittel, wobei die zu verschäumende Masse unter Druck mit vorzugsweise flüssigem Kohlendioxid vermischt und anschließend unter Schaumbildung entspannt wird. Als verschäumbare Massen werden insbesondere flüssige Ausgangsprodukte für Kunststoffe eingesetzt, die aufgrund einer nach dem Verschäumen einsetzenden Polyadditions- oder Polykondensationsreaktion zum Schaum-Kunststoff aushärten. Speziell bezieht sich die Erfindung auf Polyurethan-Schaumstoffe.

Bei der Herstellung von Polyurethan-Schaumstoffen wird mindestens eine der Reaktivkomponenten (Polyisocyanat und Isocyanat-reaktive Wasserstoffatome aufweisende Verbindungen, insbesondere Polyole) mit einem flüssigen oder gasförmigen Treibmittel versetzt, danach mit der anderen Komponente vermischt und die erhaltene Mischung entweder diskontinuierlich in eine Form oder kontinuierlich auf ein Transportband gefördert, wo die Mischung aufschäumt und aushärtet.

Zur Erzeugung des Schaums haben eine Reihe von Verfahren breite Anwendung in der Technik gefunden. Einerseits werden bei niedriger Temperatur verdampfende Flüssigkeiten, wie niedermolekulare Chlorfluorkohlenwasserstoffe, Methylenchlorid, Pentan usw. eingesetzt, die aus der noch flüssigen Reaktivmischung verdampfen und Bläschen bilden. Ferner kann in die Reaktivmischung bzw. in eine der Komponenten Luft eingeschlagen werden (mechanische Schaumerzeugung) und schließlich wird bei Polyurethanschäumen Wasser als Treibmittel der Polyolkomponente zugesetzt, das nach Vermischung der Isocyanatkomponente durch Reaktion mit dem Isocyanat Kohlendioxid als Schäumgas freisetzt (chemische Schaumerzeugung).

WO 96/00644 offenbart ein Verfahren und eine Vorrichtung zur Herstellung von Schaumstoffen aus Zweikomponenten - Reaktivkunststoffen unter Einsatz von Kohlendioxid als Treibmittel durch Vermischen mindestens einer der Reaktivkomponenten mit Kohlendioxid unter Druck, unter Erzeugung einer flüssigen Kohlendioxid enthaltenden Mischung, Vermischung mit der anderen Reaktivkomponente, Entspannen und Aushärten des Kunststoffs, wobei die Kohlendioxid enthaltende Mischung der Reaktivkomponten durch mindestens ein feinmaschiges Sieb auf Umgebungsdruck entspannt wird und dabei während der Entspannung hohen Schergeschwindigkeiten in der Größenordnung bis 5000/sec. ausgesetzt wird. WO 96/00644 ist eine ältere europäische Patentanmeldung nach Artikel 54 (3) EPÜ.

Aus Gründen der Umweltverträglichkeit, der Arbeitshygiene und aufgrund der vergleichsweise hohen Löslichkeit von flüssigem Kohlendioxid in der Polyolkomponente wurde flüssiges Kohlendioxid bereits vielfach als Treibmittel vorgeschlagen; siehe beispielsweise GB-A 803 771 und US-A 4,337,318 auf denen der Oberbegriff des unabhängigen Anspruchs 1 beruht. Jedoch hat Kohlendioxid bisher keinen Eingang in die Technik gefunden, offenbar aufgrund der Schwierigkeiten, bei der erforderlichen Entspannung der Reaktivmischung von Drücken zwischen 10 und 20 bar gleichmäßige Schäume zu erzeugen. Dabei besteht das Problem einerseits darin, daß unmittelbar nach der Entspannung das Kohlendioxid relativ plötzlich verdampft, so daß eine sehr starke Volumenvergrößerung der Reaktionsmischung um einen Faktor von beispielsweise ca. 10 erfolgt, die schwer zu beherrschen ist, und andererseits die Reaktivmischung zu Freisetzungsverzügen des Kohlendioxids neigt, die 3 bis 6 bar unterhalb des Gleichgewichtsdampfdrucks von CO₂ bei der jeweiligen Temperatur liegen können, so daß es zu plötzlichen explosionsartigen Kohlendioxid-Freisetzungen kommt, mit der Folge, daß große Blasen oder Lunker in den Schaumstoff eingeschlossen sind.

Gemäß einer Firmenschrift der Cannon-Group soll das Problem der Verschäumung mittels flüssigem Kohlendioxid dadurch gelöst werden, daß der Reaktivmischung zusätzlich Stickstoff als Blasenkeimbildner zugesetzt wird, die Entspannung stufenweise durchgeführt wird und ferner eine besondere Ablagevorrichtung für den Schaum geschaffen wird. Einzelheiten des Verfahrens wurden bisher nicht bekannt.

Die vorliegende Erfindung beruht nun auf der Erkenntnis, daß es gelingt, eine Vielzahl von mikroskopischen Blasenkeimen zu erzeugen, wenn die Reaktivmischung während der Entspannung vielfach wechselnden Schergeschwindigkeiten mit einer Vielzahl von aufeinanderfolgenden Schergeschwindigkeitsmaxima oberhalb von 10⁵/sec, ausgesetzt wird.

Gegenstand der vorliegenden Erfindung ist ein Verfahren zur Herstellung von Schaumstoffen nach Anspruch 1 aus Mehrkomponentenkunststoffen, insbesondere Zweikomponentenkunststoffen, unter Einsatz von Kohlendioxid als Treibmittel durch Vermischen mindestens einer der Reaktivkomponenten mit Kohlendioxid unter Druck, Vermischen der Kohlendioxid enthaltenden Komponente mit den weiteren Reaktivkomponenten bzw. der zweiten Reaktivkomponente unter Druck, Entspannen der Mischung und Aushärten, das dadurch gekennzeichnet ist, daß die Kohlendioxid enthaltende Mischung der Reaktivkomponenten unter vielfach wiederholter Aufteilung in eine Vielzahl von Einzelströmen unter Aufprägung von vielfach wechselnder Schergeschwindigkeit mit Maximalwerten von mindestens 10⁵/sec entspannt wird. Vorteilhaft wird daher vorgeschlagen, die flüssiges Kohlendioxid enthaltende Reaktivmischung durch eine Siebpackung zu drücken und dabei zu entspannen.

Vorzugsweise sollen die Schergeschwindigkeitsmaxima zwischen 10⁵ und 10⁸/sec betragen.

Im folgenden wird unter "flüssiges Kohlendioxid enthaltende Mischung" eine unter erhöhtem Druck stehende homogene Flüssigkeit verstanden, aus der nach Entspannen unter den vom Kohlendioxidgehalt abhängigen Gleichgewichtsdruck oberhalb Umgebungsdruck Kohlendioxid freigesetzt wird. Die flüssiges Kohlendioxid enthaltende Mischung kann durch Auflösen von gasförmigem oder festem Kohlendioxid in der mindestens einen Reaktivkomponente oder durch Vermischen mit flüssigem Kohlendioxid hergestellt worden sein.

Beim Durchgang durch eine Siebpackung wird der Reaktivmischung ein ständig wechselndes Geschwindigkeitsprofil aufgeprägt, das die geforderte vielfache hohe Scherung zur Blasenkeimerzeugung bewirkt.

Gleichzeitig wird dadurch eine sehr homogene Blasenkeimdichte erzeugt, daß der Strom der Reaktivmischung erfindungsgemäß beim Durchgang durch die Packung wiederholt in eine Vielzahl von Einzelströmen aufgeteilt wird.

Vorzugsweise beträgt die Verweilzeit der Mischung in der Packung zwischen 10⁻⁴ und 10⁻² sec, besonders bevorzugt 10⁻⁴ bis 10⁻³ sec.

Ferner hat sich für die erfindungsgemäß vorteilhätte Blasenkeim- und Schaumbildung als vorteilhaft erwiesen, daß durch die Packung selbst 70 bis 90 % der Packungsebene abgedeckt sind, d.h. die lichte Weite der Packung lediglich 10 bis 30 % beträgt, so daß nach Austritt aus der Packung ein hinreichend großer Zwischenraum zwischen den einzelnen Materialströmen besteht, daß eine auch explosionsartige plötzliche seitliche Ausdehnung des Materialstroms aufgrund der Ausbildung von Gasblasen ohne wesentliche plötzliche Erhöhung der Vorwärtsgeschwindigkeit erfolgen kann.

Als Siebpackung geeignet sind Schüttungen aus regelmäßigen oder unregelmäßigen organischen oder anorganischen Füllkörpern, bevorzugt aus Kugeln. Die Füllkörper können zwischen zwei Siebe, Netze oder Lochplatten gepackt werden, wobei die Maschenweite kleiner ist als der Durchmesser bzw. die kleinste Querschnittsabmessung der Füllkörper. Geeignet sind ferner übereinandergeschichtete Siebe oder Lochplatten. Ferner sind als Siebpackung Sintermetallplatten bzw. Sinterglasplatten geeignet, die entsprechend porös versintert sind. In diesem Falle erübrigen sich Netze oder Lochplatten zur Abstützung.

Die Abmessungen der Füllkörper werden vorzugsweise so gewählt, daß sich engste Durchtrittskanäle mit Querschnittsflächen von weniger als 0,5 mm², vorzugsweise weniger als 0,2 mm², besonders bevorzugt zwischen 0,02 bis 0,2 mm², für die Packung ergeben.

Im Falle einer Kugelpackung werden bevorzugt Kugeln eines Durchmessers von 1 bis 3 mm eingesetzt, wobei (bei dichter Kugelpackung) engste Durchtrittskanäle von ca. 0,04 bis 0,35 mm² realisiert werden.

Die Schichtdicke der Packung in Durchtrittsrichtung beträgt vorzugsweise 10 bis 500 mm, besonders bevorzugt 10 bis 400 mm. Besonders bevorzugt ist die Pakkung mit in Durchtrittsrichtung sich erweiternder Querschnittsfläche um einen Faktor 2 bis 4 ausgebildet, so daß Volumenvergrößerungen der Mischung aufgrund bereits gebildeter Mikro-Schaumblasen aufgefangen werden.

Die Viskosität der flüssiges Kohlendioxid enthaltenden Reaktiv-Mischung kann 50 bis 2.000 mPas, vorzugsweise 70 bis 800 mPas, insbesondere bevorzugt 70 bis 120 mPas, betragen. Unter Berücksichtigung der Viskosität beträgt die maximale Scherspannung der Mischung beim Durchgang durch die Packung vorzugsweise mindestens 100 bis 1.000 Pa. Insbesondere bevorzugt sind maximale Scherspannungen zwischen 10⁷ und 10¹⁰ Pa.

Der erforderliche Druck der Reaktivmischung vor dem Eintritt in die Packung ist abhängig von der gelösten Menge an flüssigem Kohlendioxid. So liegt der Gleichgewichtsdruck bei einem Gehalt von 2 Gew.-% Kohlendioxid in der Reaktivmischung bei 7 bar, bei einem Gehalt von 4 Gew.-% Kohlendioxid in der Reaktivmischung bei 11 bar (Temperatur des Reaktivgemisches ist gleich Umgebungstemperatur). Erfindungsgemäß bevorzugt soll der Druck der Reaktivmischung vor dem Durchtritt durch das Sieb das 1,1-fache bis 1,8-fache, besonders bevorzugt das 1,3-fache bis 1,6-fache, des Gleichgewichtsdrucks betragen. Gleichgewichtsdruck bezeichnet dabei denjenigen Druck, bei dem eine über der Reaktivmischung hertschende Kohlendioxid-Atmosphäre im Gleichgewicht mit dem gelösten Kohlendioxid steht. Der Gleichgewichtsdruck hängt auch von der Zusammensetzung der Reaktivmischung (ohne CO₂) ab.

Ein oberhalb des Gleichgewichtsdrucks liegender Druck vor dem Eintritt in die Packung ist erforderlich, damit die Mischung beim Eintritt in die Packung noch homogen ist, d.h., daß vor dem Eintritt in die Packung noch keine Bildung von Gasblasen erfolgt. Jedoch kann auch unmittelbar vor dem Eintritt der Mischung in die Packung eine Drosselung des Druckes von oberhalb Gleichgewichtsdruck auf einen Druck unterhalb des Gleichgewichtsdruckes erfolgen. Die Drosselung kann durch eine Loch- oder Schlitzplatte erfolgen, die im Abstand von 0,5 bis 3 mm vor der Packung angeordnet ist, wobei die Weite der Durchtrittsöffnungen 3 bis 15 mm und die freie Durchtrittsfläche 1 bis 10 % der Fläche der Lochplatte beträgt. Vorzugsweise beträgt der Druck der Mischung vor dem Eintritt in die Packung 0,6 bis 0,9 des Gleichgewichtsdrucks.

Aufgrund der hervorragenden Wirkung der Entspannung der Reaktivmischung durch die Packung im Hinblick auf die Blasenkeimbildung ist die Mitverwendung von Luft oder Stickstoff erfindungsgemäß nicht erforderlich.

Erfindungsgemäß gelingt es, unmittelbar nach Durchtritt der Reaktivmischung durch die Packung einen Flüssig-Polyurethan-Schaum (Froth) mit einer Dichte von 50 bis 200 kg/m³ bei Einsatz von 1 bis 4 Gew.-% CO₂ bezogen auf die Reaktivmischung zu erzeugen. Zur Erzeugung von Schäumen mit noch geringerer Dichte wird vorzugsweise zusätzlich Wasser als Treibmittel eingesetzt, das in Reaktion mit dem Isocyanat ebenfalls Kohlendioxid als Treibgas erzeugt. Auf diese Weise gelingt es, Weichschäume mit einer Rohdichte von unter 15 kg/m³ zu erzeugen.

Die Erfindung wird nachfolgend anhand der beigefügten Figuren näher erläutert:

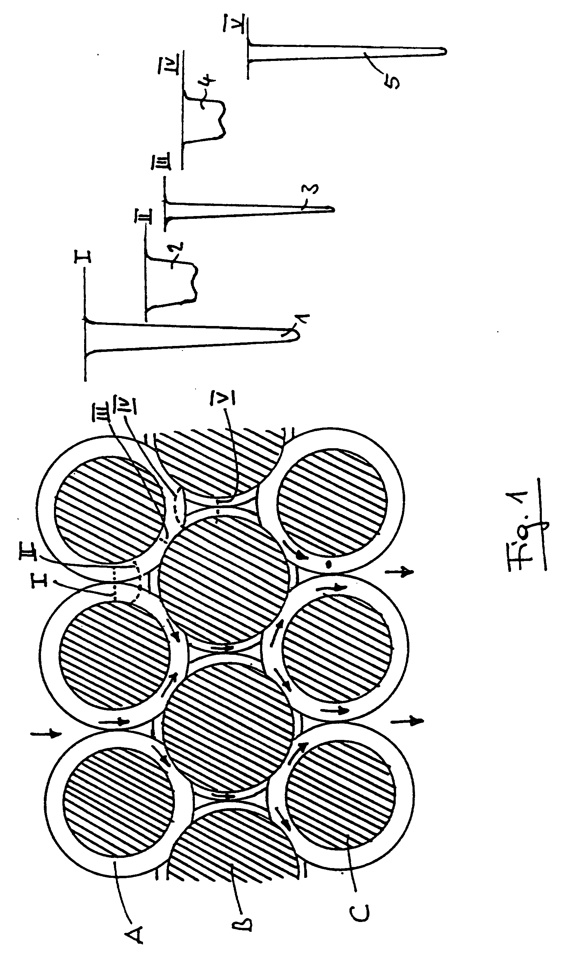

Fig. 1 erläutert das erfindungsgemäße Prinzip der Erzeugung hoher vielfach wechselnder Schergeschwindigkeiten beim Durchgang durch eine Siebpackung. Dargestellt ist der vergrößerte Querschnitt durch drei Schichtebenen A, B und C einer idealen dichten Kugelpackung. Ferner sind qualitative Geschwindigkeitsprofile 1 bis 5 der Reaktivmischung in den Durchtrittsflächen I bis V dargestellt.

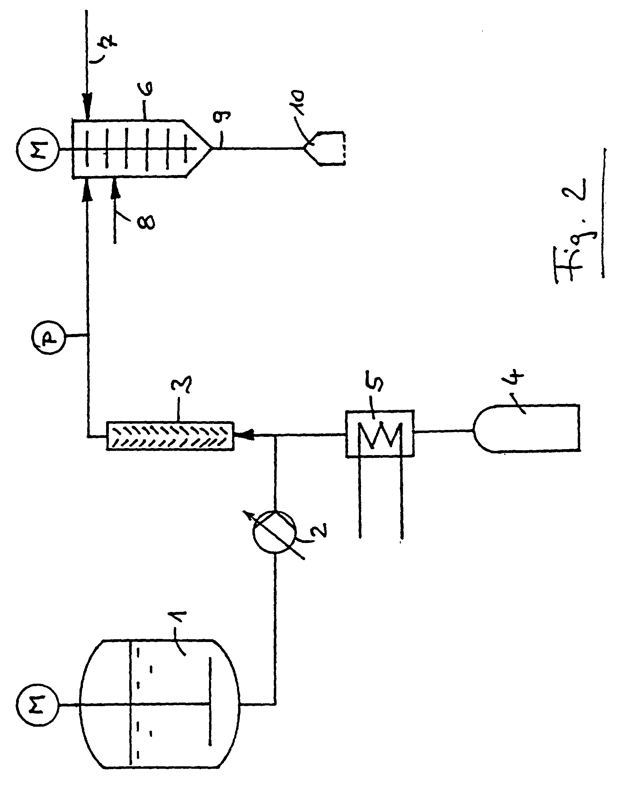

Fig. 2 zeigt schematisch in allgemeiner Form das Verfahren zur Herstellung von Polyurethanschaum. Dabei wird aus einem Vorratsbehälter I über die Dosierpumpe 2 Polyol in den Statikmischer 3 gepumpt. Aus dem Behälter 4 wird flüssiges Kohlendioxid über den Wärmeaustauscher 5 ebenfalls dem Statikmischer zugeführt und hier mit dem Polyol vermischt. Vorzugsweise erfolgt die Vermischung im Statikmischer 3 bei einem am Ausgang des Statikmischers gemessenen Druck P von 60 bis 150 bar. Mittels Wärmeaustauscher 5 wird sichergestellt, daß die Reaktivmischung auch nach evtl. Wärmeaufnahme aus Pumpen und Mischaggregaten usw. unterhalb der kritischen Temperatur von 31°C bleibt. Die Mischung aus Polyol und flüssigem Kohlendioxid wird dem Mischkopf 6 zugeführt, wo die Vermischung mit dem Isocyanat (Pfeil 7) und weiteren Additiven wie Schaumstabilisatoren usw. (Pfeil 8) erfolgt. Am Ausgang 9 des Mischkopfes 6 ist die Entspannungsvorrichtung 10 angeflanscht.

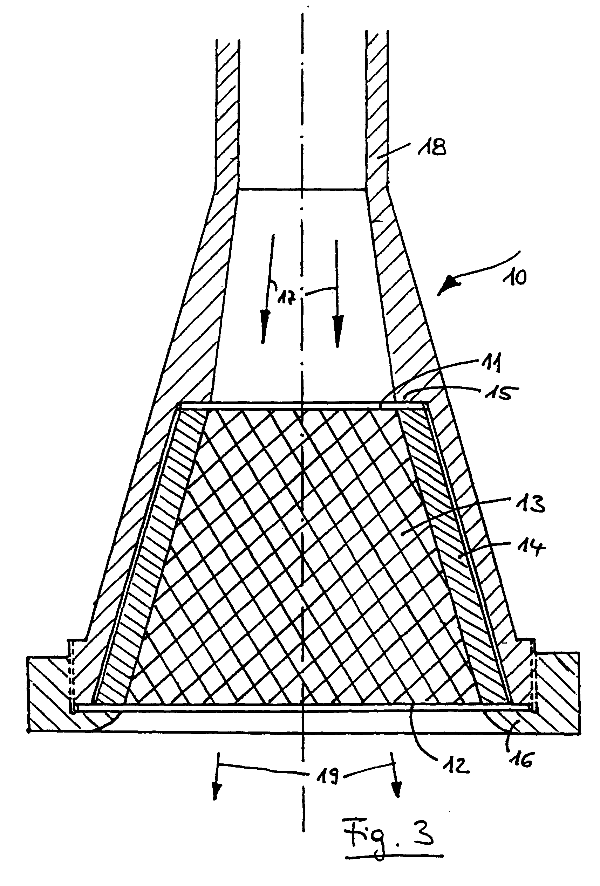

Fig. 3 zeigt eine Ausführungsform des Entspannungsgerätes 10. Das Entspannungsgerät besteht aus einem Rohr 18, das gegebenenfalls eine konische Erweiterung aufweisen kann und in dem zwischen den Sieben 11 und 12 die Packung 13 fixiert ist. Die Siebe werden mittels Distanzkonusrohr 14 gegen die Schulter 15 mittels Mutter 16 verschraubt. Die flüssiges Kohlendioxid enthaltende Reaktivmischung trifft in Richtung Pfeil 17 auf die Siebe und tritt als flüssiger Schaum entlang Pfeilen 19 aus. Das Entspannungsgerät 10 kann auch einen rechteckigen Querschnitt aufweisen. Das Distanzkonusrohr 14 ist vorzugsweise auf seiner Innenseite mit einem elastischen Polymer belegt, in das sich die benachbarten Packungs-Kugeln eindrucken können, so daR vergrößerte freie Durchtrittsquerschnitte am Rand der Pakkung vermieden werden.

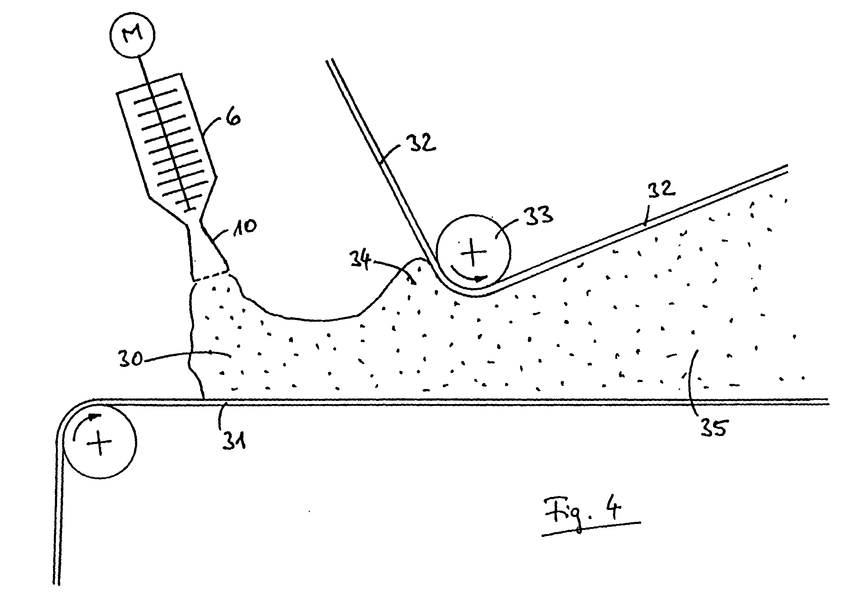

Fig. 4 zeigt eine Anlage zur Herstellung von Blockschaum unter Einsatz des Schaumbildungsgerätes. Aus dem Mischkopf 6 tritt die Reaktivmischung durch das Siebe enthaltende Schaumbildungsgerät 10 als Flüssigschaum 30 aus und wird auf die untere Kaschierfolie 31, die auf einem nicht gezeichneten Transportband läuft, abgelegt. Die obere Kaschierfolie 32 wird über eine Walze 33 geführt, die in den auf der unteren Kaschierfolie 31 abgelegten und damit geförderten Schaum eintaucht, so daß sich eine Barriere 34 bildet, die der Verteilung des Schaums über die Breite und der Verhinderung des Lufteintritts in den Zwischenraum zwischen den Kaschierfolien 31 und 32 dient. Nach Durchgang unter der Walze 33 beginnt der Schaum aufgrund der nun einsetzenden chemischen Reaktion weiter zu expandieren (35).

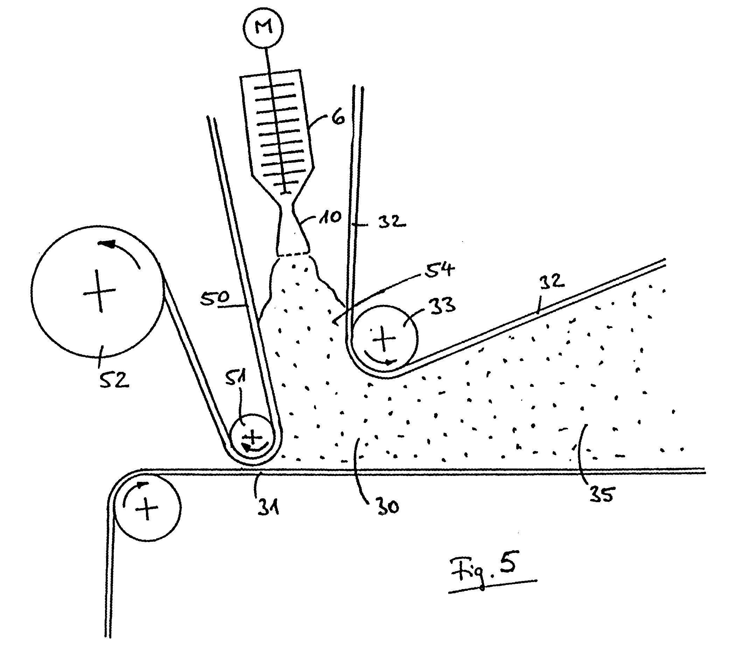

Fig. 5 zeigt eine Anlage zur Herstellung von Blockschaum gemäß Fig. 4, wobei jedoch eine Hilfskaschierfolie 50 von oben in Richtung auf die untere Kaschierfolie 31 zugeführt wird. Die Hilfskaschierfolie 50 wird mittels einer Rolle 51 gegen die untere Kaschierfolie 31 schleifend geführt und umgelenkt und wieder aufgewickelt 52. Der Flüssigschaum 30 wird in den aus im wesentlich senkrecht verlaufender oberer Kaschierfolie 32 und Hilfskaschierfolie 50 gebildeten Trog 54 gefördert.

## Patentansprüche

1. Verfahren zur Herstellung von Schaumstoffen aus Zweikomponenten-Reaktivkunststoffen unter Einsatz von Kohlendioxid als Treibmittel durch Vermischen mindestens einer der Reaktivkomponenten mit Kohlendioxid unter Druck unter Erzeugung einer flüssiges Kohlendioxid enthaltenden Mischung, Vermischen mit der anderen Reaktivkomponente, Entspannen und Aushärten des Kunststoffs, **dadurch gekennzeichnet, dass** die Kohlendioxid enthaltende zweite Mischung unter vielfach wiederholter Aufteilung in eine Vielzahl von Einzelströmen unter Aufprägung von vielfach wechselnden Schergeschwindigkeiten mit Maximalwerten von mindestens 10⁵/sec entspannt wird.

2. Verfahren nach Anspruch 1, **dadurch gekennzeichnet, dass** als Zweikomponenten-Reaktivkunststoff Polyurethan-Schaumstoff hergestellt wird.

3. Verfahren nach Anspruch 1 oder 2, **dadurch gekennzeichnet, dass** die zweite Mischung durch eine Siebpackung gedrückt und dabei entspannt wird.

4. Verfahren nach Anspruch 3, **dadurch gekennzeichnet, dass** die Verweilzeit der Mischung in der Siebpackung 10⁻⁴ bis 10⁻² sec beträgt.

5. Verfahren zum Austrag einer zu verschäumenden Zweikomponenten-Reaktivkunststoffmischung, die flüssiges Kohlendioxid enthält, in eine Form oder auf ein Transportband, **dadurch gekennzeichnet, dass** die Mischung durch eine in der Austragsöffnung angeordnete Siebpackung ausgetragen wird, wobei die Verweilzeit der Mischung in der Packung 10⁻⁴ bis 10⁻² sec beträgt.

6. Verfahren nach Anspruch 5, **dadurch gekennzeichnet, dass** die Siebpackung in Form von geschichteten Sieben oder Lochplatten, zwischen Sieben oder Netzen angeordneten Schüttungen aus anorganischen oder organischen Füllkörpern oder Sintermetall- oder Sinterglasplatten ausgebildet ist.

7. Verfahren nach Anspruch 5 oder 6, **dadurch gekennzeichnet, dass** die Siebpackung engste Durchtrittskanäle mit Querschnittsflächen von 0,02 bis 0,2 mm² aufweist.

8. Verfahren nach einem der Ansprüche 5 bis 7, **dadurch gekennzeichnet, dass** die lichte Weite der Packung 10 bis 30 % der Packungsquerschnittsebene beträgt.

## Claims

1. A process for the production of foams from two-component reactive plastics using carbon dioxide as a blowing agent by mixing at least one of the reactive components with carbon dioxide under pressure so producing a mixture containing liquid carbon dioxide, mixing with the other reactive component, depressurising and curing the plastic, **characterised in that** the second mixture containing carbon dioxide is depressurised while being repeatedly divided into a plurality of individual streams while being exposed to repeatedly changing shear rates with maximum values of at least 10⁵/sec.

2. A process according to claim 1, **characterised in that** the two-component reactive plastic which is produced is polyurethane foam.

3. A process according to claim 1 or 2, **characterised in that** the second mixture is passed through a screen packing and so depressurised.

4. A process according to claim 3, **characterised in that** the residence time of the mixture in the screen packing is 10⁻⁴ to 10⁻² sec.

5. A process for discharging a two-component reactive plastic mixture, which contains liquid carbon dioxide and is to be foamed, into a mould or onto a conveyor belt, **characterised in that** the mixture is discharged through a screen packing arranged in a discharge orifice, wherein the residence time of the mixture in the screen packing is 10⁻⁴ to 10⁻² sec.

6. A process according to claim 5, **characterised in that** the screen packing assumes the form of stacked screens or perforated plates, beds of inorganic or organic packing materials arranged between screens or meshes or plates of sintered metal or sintered glass.

7. A process according to claim 5 or 6, **characterised in that** the narrowest channels of the screen packing exhibit a cross-sectional area of from 0.02 to 0.2 mm².

8. A process according to one of claims 5 to 7, **characterised in that** the free space of the packing occupies 10 to 30% of the plane of the packing.

## Revendications

1. Procédé pour la fabrication de mousses en résines synthétiques réactives à deux composants avec utilisation du dioxyde de carbone en tant qu'agent porogène par mélange d'au moins un des composants réactifs avec le dioxyde de carbone sous pression et formation d'un mélange contenant le dioxyde de carbone liquéfié, mélange avec l'autre composant réactif, détente et durcissement de la résine synthétique, **caractérisé en ce que** le deuxième mélange contenant le dioxyde de carbone est détendu avec division répétée de nombreuses fois en un grand nombre de courants individuels auxquels on imprime des vitesses de cisaillement variant à de nombreuses reprises avec des valeurs maximales d'au moins 10⁵/s.

2. Procédé selon la revendication 1, **caractérisé en ce que** l'on prépare en tant que résine synthétique réactive à deux composants une mousse de polyuréthane.

3. Procédé selon la revendication 1 ou 2, **caractérisé en ce que** le second mélange est refoulé au travers d'un bloc tamiseur où il se détend.

4. Procédé selon la revendication 3, **caractérisé en ce que** la durée de passage du mélange dans le bloc tamiseur est de 10⁻⁴ à 10⁻² s.

5. Procédé pour évacuer un mélange de résines synthétiques réactives à deux composants devant être transformé en mousse, qui contient du dioxyde de carbone, dans un moule ou sur une bande transporteuse, **caractérisé en ce que** le mélange est évacué à travers un bloc tamiseur disposé dans l'orifice d'évacuation, où la durée de passage du mélange dans le bloc est 10⁻⁴ à 10⁻² s.

6. Procédé selon la revendication 5, **caractérisé en ce que** le bloc tamiseur consiste en tamis ou plaques perforées empilées en couches, en amas de corps de garnissage minéraux ou organiques disposés entre des tamis ou des toiles métalliques ou en plaques de métaux frittés ou de verre fritté.

7. Procédé selon la revendication 5 ou 6, **caractérisé en ce que** le bloc tamiseur comporte des canaux de passage, les plus étroits ayant des sections de 0,02 à 0,2 mm².

8. Procédé selon l'une des revendications 5 à 7, **caractérisé en ce que** le passage libre du bloc représente 10 à 30 % de la section du bloc.
